(19) **Europäisches Patentamt European Patent Office Office européen des brevets**

(11) **EP 4 207 365 B1**

(12) **EUROPEAN PATENT SPECIFICATION**

(45) Date of publication and mention
of the grant of the patent:
**03.12.2025 Bulletin 2025/49**

(21) Application number: **22861576.1**

(22) Date of filing: **01.08.2022**

(51) International Patent Classification (IPC):
$H01M\ 4/62^{(2006.01)}$    $H01M\ 4/139^{(2010.01)}$
$H01M\ 10/42^{(2006.01)}$    $H01M\ 4/04^{(2006.01)}$
$H01M\ 10/052^{(2010.01)}$    $B05C\ 5/02^{(2006.01)}$
$B05C\ 11/10^{(2006.01)}$    $H01M\ 4/13^{(2010.01)}$
$H01M\ 10/058^{(2010.01)}$    $B05D\ 1/26^{(2006.01)}$
$B05D\ 5/12^{(2006.01)}$

(52) Cooperative Patent Classification (CPC):
**H01M 10/052; H01M 4/0404; H01M 4/13;**
**H01M 4/139; H01M 4/62; H01M 4/622;**
**H01M 4/623; H01M 10/058;** B05D 1/26; B05D 5/12;
B05D 2401/10; Y02E 60/10

(86) International application number:
**PCT/KR2022/011304**

(87) International publication number:
**WO 2023/027364 (02.03.2023 Gazette 2023/09)**

(54) **METHOD FOR MANUFACTURING ELECTRODE FOR SECONDARY BATTERY USING INSULATING COMPOSITION COMPRISING AQUEOUS BINDER SUBSTITUTED WITH NON-AQUEOUS SOLVENT**

VERFAHREN ZUR HERSTELLUNG EINER ELEKTRODE FÜR EINE SEKUNDÄRBATTERIE MIT EINER ISOLIERZUSAMMENSETZUNG MIT EINEM MIT EINEM WASSERFREIEN LÖSUNGSMITTEL SUBSTITUIERTEN WÄSSRIGEN BINDEMITTEL

PROCÉDÉ DE FABRICATION D'ÉLECTRODE POUR BATTERIE SECONDAIRE UTILISANT UNE COMPOSITION ISOLANTE COMPRENANT UN LIANT AQUEUX SUBSTITUÉ PAR UN SOLVANT NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2021 KR 20210113557**
**22.07.2022 KR 20220090828**

(43) Date of publication of application:
**05.07.2023 Bulletin 2023/27**

(73) Proprietor: **LG Energy Solution, Ltd.**
**Seoul 07335 (KR)**

(72) Inventors:
• **JANG, Seong Keun**
**Daejeon 34122 (KR)**
• **PARK, Sung Chul**
**Daejeon 34122 (KR)**
• **CHOI, Sang A**
**Daejeon 34122 (KR)**
• **YOON, Sung Soo**
**Daejeon 34122 (KR)**

(74) Representative: **Plasseraud IP**
**104 Rue de Richelieu**
**CS92104**
**75080 Paris Cedex 02 (FR)**

(56) References cited:
**EP-A1- 3 723 166**    **EP-A1- 3 754 755**
**EP-A1- 4 181 267**    **EP-A1- 4 181 268**
**JP-A- 2018 045 952**    **JP-A- 2020 167 067**
**JP-A- 2020 181 636**    **JP-A- 2021 026 852**
**JP-A- 2021 026 885**    **KR-A- 20160 091 732**

KR-A- 20160 093 633    KR-A- 20200 064 752
KR-A- 20200 088 662

KR-A- 20160 093 633    KR-A- 20200 064 752
KR-A- 20200 088 662

**Description**

[Technical Field]

This application claims the benefit of priority based on Korean Patent Application No. 10-2021-0113557, filed on August 27, 2021, and Korean Patent Application No. 10-2022-0090828, filed on July 22, 2022.

The present invention relates to a method of manufacturing an electrode for a secondary battery using an insulating composition including an aqueous binder substituted with a non-aqueous solvent.

[Background Art]

As the technology for mobile devices is developed and the demand for mobile devices increases, the demand for secondary batteries as a power source is rapidly increasing, and accordingly, many studies have been conducted on batteries which can meet various needs.

Typically, in terms of a battery shape, there is a high demand for thin prismatic and pouch-type batteries that can be applied to products such as mobile phones and the like. Also, in terms of a material, there is a high demand for lithium secondary batteries such as lithium cobalt polymer batteries excellent in energy density, discharge voltage, and safety.

One of the main research tasks related to the secondary batteries is to enhance safety. Battery safety-related accidents are mainly caused by the arrival of an abnormal high temperature state due to a short circuit between a positive electrode and a negative electrode. That is, in normal situations, since a separator is provided between a positive electrode and a negative electrode, electrical insulation is maintained. On the other hand, in abnormal situations in which a battery is excessively charged or discharged, the dendritic growth of an electrode material or an internal short circuit caused by foreign substances occurs, sharp objects such as nails and the like penetrate a battery, or a battery is excessively deformed by an external force, existing separators have limitations on maintaining electrical insulation.

As a supplementary means for preventing an internal short circuit of a battery, a method of attaching an insulating tape or applying an insulating liquid to the boundary line between the non-coating part and coating part of an electrode to form an insulating layer has been proposed. EP4181267 discloses an insulating composition having excellent wet adhesion and a preparation method thereof. JP2021026885 discloses a nonaqueous electrolyte secondary battery comprising a positive electrode; a negative electrode; and a nonaqueous electrolyte. The positive electrode includes a positive electrode current collector, a positive electrode active material layer formed on the positive electrode current collector except for the positive electrode current collector's exposed part, and an insulating layer formed at a boundary part between the positive electrode current collector's exposed part and the positive electrode active material layer.

For example, there is a method of applying an insulating binder to the boundary line between the non-coating part and coating part of a positive electrode or applying an insulating liquid in which a mixture of the binder and inorganic particles is dispersed in a solvent to form an insulating layer.

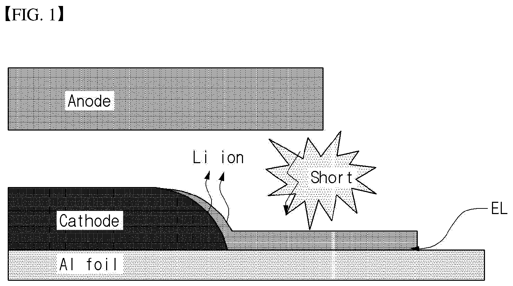

Conventionally, non-aqueous binders (e.g., PVDF) were used in an insulating layer of a positive electrode. However, the resulting insulating layer exhibits degraded adhesion (hereinafter, referred to as wet adhesion) while being immersed in a liquid electrolyte and thus does not block the migration of lithium ions in the overlay region of an electrode to cause capacity expression (see FIG. 1). Accordingly, research on the use of aqueous binders such as styrene-butadiene rubber in an insulating layer of a positive electrode has been conducted. However, to perform coating using aqueous binders such as styrene-butadiene rubber, water needs to be used as a solvent. Accordingly, there are problems in that it is difficult to apply water as a solvent to a positive electrode vulnerable to moisture, and the gelation of binders between an insulating composition and a positive electrode slurry occurs.

[Disclosure]

[Technical Problem]

The present invention is directed to providing a method of manufacturing an electrode for a secondary battery using an insulating composition including an aqueous binder substituted with a non-aqueous solvent.

[Technical Solution]

One aspect of the present invention provides a method of manufacturing an electrode for a secondary battery, which includes: applying an electrode slurry including an electrode active material, a conductive material, and a non-aqueous binder onto one surface or both surfaces of a current collector; applying an insulating composition including an aqueous binder substituted with a non-aqueous solvent so that the insulating composition covers from a portion of the non-coating part of the current collector to a portion of the electrode slurry applied onto the current collector; and drying the electrode slurry and insulating composition applied onto the current collector. Also, the electrode slurry and the insulating composition include the same or same type of a non-aqueous organic solvent.

The application of an electrode slurry and the application of an insulating composition satisfies the following Expression 1.

[Expression 1]

$$0 \leq T2\text{-}T1 \leq 100 \text{ (sec)}$$

In Expression 1,

T1 refers to the time (sec) at which an electrode slurry is discharged onto a current collector from a slot-die coater in the application of an electrode slurry, and

T2 refers to the time (sec) at which an insulating composition is discharged onto a current collector from a slot-die coater in the application of an insulating composition.

In this case, the application of an insulating composition may be performed in a state in which the electrode slurry applied onto the current collector is not dried.

The non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol.

In addition, the insulating composition may further include inorganic particles.

Specifically, the inorganic particles may be one or more selected from the group consisting of AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, silicon carbide (SIC), and boron nitride (BN).

In this case, a weight ratio of the inorganic particle and aqueous binder in the insulating composition may range from 1:99 to 95:5.

The non-aqueous binder is one or more selected from the group consisting of polyvinylidene fluoride (PVDF), polyvinylidene fluoride-co-hexafluoropropylene (PVDF-co-HFP), polyethylene oxide (PEO), polyacrylic acid (PAA), polyimide (PI), polyamideimide (PAI), and a polyimide-polyamideimide copolymer (PI-PAI).

The aqueous binder is one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

In an embodiment, the insulating composition may include: an aqueous binder substituted with a non-aqueous solvent; and inorganic particles dispersed in the aqueous binder matrix substituted with a non-aqueous solvent. Specifically, a weight ratio of the inorganic particle and the aqueous binder may range from 1:99 to 95:5. Also, the insulating composition may have a viscosity at 25 °C of 50 cP to 50,000 cP.

In a specific embodiment, the non-aqueous organic solvent may be N-methyl-pyrrolidone (NMP), and the aqueous binder may be styrene-butadiene rubber (SBR).

Furthermore, the drying of the electrode slurry and insulating composition applied onto the current collector may be performed at an average temperature of 50 °C to 300 °C.

In addition, the application of an electrode slurry and the application of an insulating composition may be performed using a slot-die coater. In an embodiment, the application of an electrode slurry and the application of an insulating composition may be performed using a single die coater including two slots. In this case, the die coater may include an electrode slurry discharge slot and an insulating composition discharge slot.

In another embodiment, the application of an electrode slurry and the application of an insulating composition may be performed using two separate die coaters. In this case, the application of an insulating composition may be performed before an electrode slurry discharged in the application of an electrode slurry is dried.

[Advantageous Effects]

According to a method of manufacturing an electrode for a secondary battery of the present invention, an aqueous binder having excellent wet adhesion is used in the formation of an insulating layer, and the gelation between an electrode slurry and an insulating composition, which is caused by using different types of binders, can be prevented.

[Brief Description of the Drawings]

FIG. 1 is a schematic diagram showing the migration of lithium ions in an overlay region of an electrode.
FIG. 2 is a flow chart of a method of manufacturing an electrode for a secondary battery according to the present invention.
FIG. 3 is a photographic image showing results before and after drying when an electrode slurry and an insulating composition prepared in Comparative Example 1 are simultaneously applied.
FIG. 4 is a photographic image showing results before and after drying when an electrode slurry and an insulating composition prepared in Example 1 are simultaneously applied.
FIG. 5 shows results of measuring the wet adhesion of insulating layers of examples and comparative examples.
FIG. 6 is a graph obtained by measuring discharge capacity to evaluate a capacity expression of battery cells of Examples 5 to 7 (room-temperature discharge characteristics).
FIG. 7 is a graph obtained by measuring discharge capacity to evaluate the capacity expression of the battery cells of Examples 5 to 7 (high-temperature discharge characteristics).

[Detailed Description of the Preferred Embodiments]

As the present invention allows for various changes and a variety of embodiments, particular embodiments will be described in detail in the detailed description.
The present invention is defined in the claims
In the present invention, it should be understood that the term "include(s)" or "have(has)" is merely intended to indicate the presence of features, numbers, steps, operations, components, parts, or combinations thereof, and not intended to preclude the possibility of the presence of addition of one or more other features, numbers, steps, operations, components, parts, or combinations thereof.
In addition, in the present invention, when a portion of a layer, film, region, plate, or the like is referred to as being "on" another portion, this includes not only the case where the portion is "directly on" but also the case where there is another portion interposed therebetween. Conversely, when a portion of a layer, film, region, plate, or the like is referred to as being "under" another portion, this includes not only the case where the portion is "directly under" but also the case where there is another portion interposed therebetween. Also, herein, what is referred to as being disposed "on" may include being disposed not only on an upper part but also on a lower part.
As used herein, an "insulating layer" refers to an insulating member formed by application from at least a portion of the non-coating part of an electrode current collector to at least a portion of an electrode mixture layer and drying.
As used herein, "wet adhesion" refers to the adhesion of an insulating layer as measured in an immersed state in a liquid electrolyte. More specifically, the wet adhesion may be measured by immersing a metal specimen including an insulating layer formed therein in a liquid electrolyte, applying ultrasonic waves, and then determining whether the insulating layer is swelled or detached.
As used herein, a "metal specimen" is a space where an insulating layer is formed and may refer to a metal current collector used in manufacture of an electrode, specifically, a metal current collector blanked to have a predetermined width and a predetermined length. For example, the metal specimen may be aluminum, copper, or an aluminum alloy.
As used herein, an "overlay region" may refer to a region where an insulating layer is formed in an electrode. More specifically, in an electrode in which a mixture layer is formed, the insulating layer covers from at least a portion of a non-coating part to at least a portion of the mixture layer, and a region where an insulating layer is formed on the mixture layer is referred to as an overlay region.
Hereinafter, the present invention will be described in further detail.

**Method of manufacturing electrode for secondary battery**

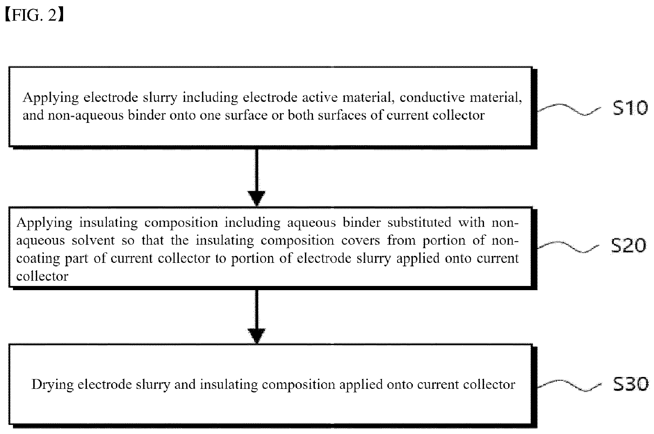

FIG. 2 is a flow chart of a method of manufacturing an electrode for a secondary battery according to the present invention.
Referring to FIG. 2, one aspect of the present invention provides a method of manufacturing an electrode for a secondary battery, which includes:

> applying an electrode slurry including an electrode active material, a conductive material, and a non-aqueous binder onto one surface or both surfaces of a current collector (S10);
> applying an insulating composition including an aqueous binder so that the insulating composition covers from at least a portion of the non-coating part of the current collector to a portion of the electrode slurry applied onto the current collector (S20); and
> drying the electrode slurry and insulating composition applied onto the current collector (S30).

In addition, the electrode slurry and the insulating composition include the same or same type of a non-aqueous organic solvent.

Since the method of manufacturing an electrode for a secondary battery according to the present invention uses the same solvent in the electrode slurry and the insulating composition, the gelation of different types of binders, which may occur when the electrode slurry and the insulating composition are simultaneously applied, can be resolved, and accordingly, electrode productivity can be increased. Also, an insulating layer can provide excellent wet adhesion by including an aqueous binder.

The method of manufacturing an electrode for a secondary battery according to the present invention satisfies the following Expression 1.

$$[\text{Expression } 1]$$

$$0 \leq T2\text{-}T1 \leq 100 \text{ (sec)}$$

In Expression 1,

> T1 refers to the time (sec) at which an electrode slurry is discharged onto a current collector from a slot-die coater in the application of an electrode slurry, and
> T2 refers to the time (sec) at which an insulating composition is discharged onto a current collector from a slot-die coater in the application of an insulating composition.

For example, Expression 1 satisfies a range of 0.001 to 100 (sec), a range of 50 (sec) or less, or a range of 0.01 to 10 (sec).

Satisfaction of Expression 1 may mean that an insulating composition is applied in a state in which the electrode slurry applied onto the current collector is not dried. The state in which the electrode slurry is not dried means a state before an electrode drying process is performed after the application of the electrode slurry. In an embodiment, in the present invention, a simultaneous coating method, in which the application of an electrode slurry and the application of an insulating composition are substantially simultaneously performed, may be used to extremely increase productivity.

For example, the application of an electrode slurry and the application of an insulating composition are performed using a single die coater including two slots.

As another example, the application of an electrode slurry and the application of an insulating composition are performed using two separate die coaters.

Meanwhile, the non-aqueous organic solvent included in the electrode slurry and insulating composition may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol.

In a specific embodiment, the non-aqueous organic solvent may be one or more selected from the group consisting of NMP, DMF, DMAc, and DMSO.

For example, the non-aqueous organic solvent may be an amide-based organic solvent, and the same solvent as a solvent used in preparation of the electrode slurry may be used. The non-aqueous organic solvent may be NMP.

When NMP is used as a solvent of the electrode slurry, a solvent of the insulating composition may also be NMP. Particularly, when NMP is used as a solvent of the insulating composition, the occurrence of cracking at the boundary between an insulating layer and an electrode mixture layer in the overlay region of an electrode may be prevented.

In addition, the insulating composition may further include inorganic particles. When inorganic particles are added in the insulating composition, it is possible to increase an electrical insulation property and minimize heat shrinkage.

For example, the inorganic particles are one or more selected from the group consisting of AlOOH, $Al_2O_3$, $\gamma$-

AlOOH, Al(OH)$_3$, Mg(OH)$_2$, Ti(OH)$_4$, MgO, CaO, Cr$_2$O$_3$, MnO$_2$, Fe$_2$O$_3$, Co$_3$O$_4$, NiO, ZrO$_2$, BaTiO$_3$, SnO$_2$, CeO$_2$, Y$_2$O$_3$, SiO$_2$, silicon carbide (SIC), and boron nitride (BN).

In addition, a weight ratio of the inorganic particle and aqueous binder in the insulating composition ranges from 1:99 to 95:5. Specifically, the weight ratio of the inorganic particle and the aqueous binder ranges from 10:90 to 90:10, 40:60 to 90:10, 45:55 to 95:15, 45:55 to 90:10, or 50:50 to 90:10. By controlling the content range of inorganic particles, both wet adhesion and thermal stability may be increased.

The non-aqueous binder is one or more selected from the group consisting of polyvinylidene fluoride (PVDF), polyvinylidene fluoride-co-hexafluoropropylene (PVDF-co-HFP), polyethylene oxide (PEO), polyacrylic acid (PAA), polyimide (PI), polyamideimide (PAI), and a polyimide-polyamideimide copolymer (PI-PAI).

The aqueous binder is one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

In an embodiment, the insulating composition of the present invention includes: an aqueous binder substituted with a non-aqueous solvent; and inorganic particles dispersed in the aqueous binder matrix substituted with a non-aqueous solvent. For example, a weight ratio of the inorganic particle and the aqueous binder ranges from 1:99 to 95:5, and a viscosity at 25 °C ranges from 50 cP to 50,000 cP.

For example, the non-aqueous organic solvent is NMP, and the aqueous binder is styrene-butadiene rubber (SBR).

In another embodiment, the drying of the electrode slurry and insulating composition applied onto the current collector is performed at an average temperature of 50 °C to 300 °C.

The method of manufacturing an electrode for a secondary battery according to the present invention will be described below in further detail.

### (1) Application of electrode slurry onto one surface or both surfaces of current collector S10)

The method of manufacturing an electrode for a secondary battery according to the present invention includes applying an electrode slurry onto one surface or both surfaces of a current collector.

In this case, as the current collector, any current collector that does not cause a chemical change in a battery and has high conductivity may be used. For example, stainless steel, aluminum, nickel, titanium, calcined carbon, or the like may be used, and aluminum or stainless steel whose surface has been treated with carbon, nickel, titanium, silver, or the like may also be used. For example, the current collector may be aluminum.

In addition, as the positive electrode active material in the electrode slurry, any positive electrode active material that is typically used in a positive electrode may be used, and a lithium manganese oxide, a lithium cobalt oxide, a lithium nickel oxide, a lithium iron oxide, or a lithium composite oxide made by combining them may be used, but the present invention is not limited thereto.

The non-aqueous binder included in the electrode slurry may include one or more resins selected from the group consisting of a polyvinylidene fluoride-hexafluoropropylene copolymer (PVDF-co-HFP), polyvinylidene fluoride, polyacrylonitrile, polymethyl methacrylate, and a copolymer thereof. As an example, the binder may include polyvinylidene fluoride.

In addition, the conductive material may be used to enhance the performance, such as electrical conductivity, of the positive electrode, and one or more selected from the group consisting of natural graphite, artificial graphite, carbon black, acetylene black, Ketjen black, and carbon fiber may be used. For example, the conductive material may include acetylene black.

Furthermore, the solvent used in the positive electrode slurry is a non-aqueous organic solvent, and the non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol and may be, for example, NMP.

<u>(2) Application of insulating composition so that insulating composition covers from a portion of non-coating part of current collector to a portion of positive electrode slurry applied onto current collector (S20)</u>

The method of manufacturing an electrode for a secondary battery according to the present invention includes applying an insulating composition including an aqueous binder substituted with a non-aqueous solvent so that the insulating composition covers from a portion of the non-coating part of the current collector to a portion of the positive electrode slurry applied onto the current collector. Specifically, the insulating composition is applied to the boundary line between the non-coating part and coating part of an electrode.

In this case, the positive electrode slurry may be in an undried state. Here, the undried slurry may refer to a slurry not having undergone a separate drying process in a drying apparatus or equipment.

As described above, the insulating composition may be applied simultaneously with the positive electrode slurry onto a current collector.

The insulating composition may include an aqueous binder. The aqueous binder is one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

Conventionally, polyvinylidene fluoride (hereinafter, referred to as PVDF), which is a non-aqueous binder, was used in an insulating layer of a positive electrode. However, when immersed in a liquid electrolyte of a secondary battery, the insulating layer exhibits degraded wet adhesion and thus is swelled or detached. On the other hand, when an aqueous binder is used in an insulating layer, a dense film is formed, and thus the insulating layer may exhibit enhanced wet adhesion. For example, styrene-butadiene rubber (SBR) may be used as the aqueous binder. Also, it is preferable to use N-methyl- pyrrolidone, which is a solvent used in the formation of a positive electrode mixture layer, as a dispersion solvent used in the formation of the insulating layer. When SBR is used as the aqueous binder, water may be used as a solvent. However, when an insulating composition and a positive electrode slurry are simultaneously applied, the gelation of PVDF, which is an organic binder used as a binder of a positive electrode, between the insulating composition and the positive electrode slurry may occur. As a result, cracks may be generated at the boundary between the insulating composition and the positive electrode slurry.

In addition, the insulating composition may further include inorganic particles. In a specific embodiment, the inorganic particles may be one or more selected from the group consisting of AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, silicon carbide (SIC), and boron nitride (BN), specifically, one or more selected from the group consisting of AlOOH, $Al_2O_3$, $\gamma$-AlOOH, and $Al(OH)_3$. For example, the inorganic particles may be AlOOH.

The inorganic particles may have an average particle diameter of 0.1 $\mu$m to 100 $\mu$m, specifically 0.5 $\mu$m to 80 $\mu$m, and more specifically 1 $\mu$m to 50 $\mu$m, 2 $\mu$m to 30 $\mu$m, 3 $\mu$m to 20 $\mu$m, or 5 $\mu$m to 10 $\mu$m. When the size of the inorganic particles falls within the above-described range, the inorganic particles can be uniformly applied in an electrode, and the resistance of lithium ions can be minimized to ensure the performance of a lithium secondary battery.

In an embodiment, a weight ratio of the inorganic particle and the aqueous binder may range from 1:99 to 95:5, specifically 10:90 to 90:10, 40:60 to 90:10, 45:55 to 95:15, 45:55 to 65:35, or 65:35 to 85:15. When the amount of the aqueous binder is excessively small, it may be difficult to obtain an insulating effect desired in the present invention, and adhesion with an electrode may be degraded. On the other hand, when the amount of the aqueous binder is excessively large, the insulating composition drips in an overlay region in coating of an electrode, and thus the safety of a battery cell may be degraded.

In addition, the insulating composition according to the present invention may include the inorganic particles and the aqueous binder in an amount of 1 to 50 parts by weight, 5 to 40 parts by weight, or 10 to 40 parts by weight with respect to 100 parts by weight of the solvent.

Additionally, the insulating composition may have a viscosity at 25 °C of 50 cP to 50,000 cP, 100 cP to 45,000 cP, 1,000 cP to 40,000 cP, 2,000 cP to 35,000 cP, 3,000 cP to 30,000 cP, 4,000 cP to 20,000 cP, or 5,000 cP to 10,000 cP. Within the above-described range, wet adhesion can be increased, and coatability, processability, and the like can be enhanced.

Furthermore, the solvent used in the insulating composition is a non-aqueous organic solvent, and the non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol.

In a specific embodiment, the non-aqueous organic solvent may be one or more selected from the group consisting of NMP, DMF, DMAc, and DMSO, specifically, one or more selected from the group consisting of NMP, DMF, and DMAc.

For example, the non-aqueous organic solvent may be an amide-based organic solvent, and the same solvent as a solvent used in preparation of the positive electrode slurry may be used. The non-aqueous organic solvent may be NMP.

As described above, in the insulating composition, the same non-aqueous organic solvent as in the positive electrode slurry may be used. When the same solvent is used in the positive electrode slurry and the insulating composition, gelation caused by using different types of binders or cracking caused by a difference in boiling point during a drying process can be resolved.

Meanwhile, the application of an insulating composition onto the current collector may be performed in a state in which the positive electrode slurry is not dried, or the positive electrode slurry and the insulating composition may be simultaneously applied.

(3) Drying of positive electrode slurry and insulating composition applied onto current collector (S30)

The method of manufacturing an electrode for a secondary battery according to the present invention includes drying the positive electrode slurry and insulating composition applied onto the current collector. In a specific embodiment, the drying of the positive electrode slurry and insulating composition applied onto the current collector may be performed at an average temperature of 50 °C to 300 °C.

In the drying of the positive electrode slurry and insulating composition, the positive electrode slurry and the insulating composition may be completely dried by a drying method typically known in the art to remove moisture. In a specific embodiment, the drying may be performed by varying a hot air method, a direct heating method, an induction heating method, and the like at an enough temperature to completely evaporate moisture, but the present invention is not limited thereto. For example, the drying of the insulating coating liquid may be performed by a hot air method.

In this case, the drying temperature may range from 50 °C to 300 °C, specifically, 60 °C to 200 °C or 70 °C to 150 °C. Meanwhile, when the drying temperature of the insulating coating liquid is less than 50 °C, it may be difficult to completely dry the insulating coating liquid due to an excessively low temperature, and when the drying temperature exceeds 300 °C, an electrode or a separator may be deformed due to an excessively high temperature.

A positive electrode for a lithium secondary battery may be manufactured by forming a positive electrode mixture layer and an insulating layer on a current collector and roll-pressing the current collector.

**Insulating composition for electrode of secondary battery**

The present invention also provides an insulating composition for an electrode of a secondary battery. In an embodiment, the insulating composition according to the present invention includes: a non-aqueous organic solvent; and inorganic particles and an aqueous binder dispersed in the non-aqueous organic solvent. Also, the insulating composition includes the inorganic particles and the aqueous binder in a weight ratio of 1:99 to 95:5 and has a viscosity at 25 °C of 50 cP to 50,000 cP.

The insulating composition for an electrode of a secondary battery according to the present invention has an advantage in that the migration of lithium ions in the overlay region of an electrode can be blocked to suppress capacity expression and the like due to having excellent wet adhesion in a liquid electrolyte.

For this reason, the present invention provides an insulating composition for an electrode, in which inorganic particles and an aqueous binder are dispersed in a non-aqueous organic solvent. Generally, an electrode in a secondary battery is present in an immersed state in a liquid electrolyte, and accordingly, a conventional insulating layer exhibits degraded wet adhesion while being immersed in a liquid electrolyte and does not block the migration of lithium ions in the overlay region of the electrode to cause capacity expression. Particularly, when capacity is expressed in the overlay region of the electrode, lithium ions may be precipitated, which may cause the stability of a battery cell to be degraded. In the present invention, an insulating composition for an electrode, in which inorganic particles and an aqueous binder are dispersed in a non-aqueous organic solvent used as a solvent of an electrode slurry, can be provided to enhance wet adhesion in a liquid electrolyte. That is, when applied to an electrode, the insulating composition enhances wet adhesion, and thus the migration of lithium ions in the overlay region of the electrode can be suppressed, and lithium ions can be prevented from being precipitated. Therefore, when applied to an electrode of a secondary battery, the insulating composition can enhance the stability of the secondary battery.

In a specific embodiment, the insulating composition for an electrode according to the present invention consists of inorganic particles and an aqueous binder which are dispersed in a non-aqueous organic solvent in a ratio of 1:99 to 95:5. When the insulating composition for an electrode is used as an insulating layer, wet adhesion can be excellent.

Meanwhile, the wet adhesion of the insulating layer may be measured by immersing a metal specimen including an insulating layer formed therein in a liquid electrolyte, applying ultrasonic waves, and then determining whether the insulating layer formed in the metal specimen is swelled or detached.

The liquid electrolyte used in the measurement of wet adhesion may include an organic solvent and an electrolyte salt, and the electrolyte salt may be a lithium salt. As the lithium salt, any lithium salt that is typically used in a non-aqueous liquid electrolyte for a lithium secondary battery may be used without limitation. For example, an anion of the lithium salt may include any one or two or more selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $CF_3(CF_2)_7SO_3^-$, $CF_3CO_2^-$, $CH_3CO_2^-$, $SCN^-$, and $(CF_3CF_2SO_2)_2N^-$.

As the above-described organic solvent included in the liquid electrolyte, any organic solvent that is typically used in a liquid electrolyte for a lithium secondary battery may be used without limitation. For example, an ether, an ester, an amide, a linear carbonate, a cyclic carbonate, or the like may be used alone or in combination of two or more thereof. Among them, a cyclic carbonate, a linear carbonate, or a carbonate compound which is a mixture thereof may be typically used.

In addition, the insulating composition for an electrode of a secondary battery according to the present invention may be applied to a positive electrode, and the non-aqueous organic solvent may be one or more selected from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol.

In a specific embodiment, the non-aqueous organic solvent may be one or more selected from the group consisting of NMP, DMF, DMAc, and DMSO, specifically, one or more selected from the group consisting of NMP, DMF, and DMAc.

For example, the non-aqueous organic solvent may be an amide-based organic solvent, and the same solvent as a solvent used in preparation of a positive electrode slurry may be used. The non-aqueous organic solvent may be NMP.

In a specific embodiment, when used as an insulating coating liquid of a positive electrode, the insulating composition according to the present invention may be applied and dried simultaneously with the positive electrode mixture layer. In this case, when the same solvent as a solvent of the positive electrode slurry is used as a solvent of the insulating composition, a difference in a drying rate and the like is reduced, and thus cracking and the like that occur at the boundary between the insulating coating layer and the positive electrode mixture layer may be prevented. Particularly, the NMP solvent may be used as a substitution solvent, and the aqueous binder may be present as an NMP-substituted binder.

The aqueous binder is one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose. In a specific embodiment, the aqueous binder may be one or more selected from the group consisting of styrene-butadiene rubber, acrylate styrene-butadiene rubber, acrylonitrile-butadiene rubber, and acrylonitrile-butadiene-styrene rubber. For example, the aqueous binder may be styrene-butadiene rubber.

Additionally, the insulating composition can enhance the safety of a battery by including inorganic particles, and the strength of the insulating layer can also be enhanced. The amount of the inorganic particles may be appropriately adjusted in consideration of the viscosity of an insulating composition, thermal resistance, an insulating property, a filling effect, dispersibility, stability, or the like. Generally, as the size of inorganic particles increases, the viscosity of a composition including the same increases, and the possibility of sedimentation in an insulating composition increases. Also, as the size of the inorganic particles decreases, thermal resistance increases. Therefore, considering the above points, an appropriate type and size of inorganic particles may be selected, and if necessary, at least two types of inorganic particles may be used.

In a specific embodiment, the inorganic particles may be one or more selected from the group consisting of AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, silicon carbide (SIC), and boron nitride (BN), specifically, one or more selected from the group consisting of AlOOH, $Al_2O_3$, $\gamma$-AlOOH, and $Al(OH)_3$. For example, the inorganic particles may be AlOOH.

A weight ratio of the inorganic particle and the aqueous binder may range from 1:99 to 95:5, 10:90 to 70:30, 20:80 to 60:40, or 40:60 to 60:40. For example, a weight ratio of the inorganic particle and aqueous binder in the insulating composition may be 50:50. Meanwhile, when the amount of the aqueous binder is excessively small, it may be difficult to obtain an insulating effect desired in the present invention, and adhesion with an electrode may be degraded. On the other hand, when the amount of the aqueous binder is excessively large, the insulating composition drips in an overlay region in coating of an electrode, and thus the safety of a battery cell may be degraded.

The inorganic particles may have an average particle diameter of 0.01 $\mu$m to 100 $\mu$m, specifically, 0.5 $\mu$m to 80 $\mu$m, 1 $\mu$m to 50 $\mu$m, 2 $\mu$m to 30 $\mu$m, 3 $\mu$m to 20 $\mu$m, or 5 $\mu$m to 10 $\mu$m. When the size of inorganic particles falls within the above-described range, the inorganic particles can be uniformly applied in the electrode, and the resistance of lithium ions can be minimized to ensure the performance of a lithium secondary battery.

In another embodiment, the insulating composition may include first and second inorganic particles having mutually different particle diameters and may have a bimodal particle size distribution. This means that the inorganic particles are composed of a mixture of small-sized particles and large-sized particles, and small-sized second inorganic particles may fill the empty space between large-sized first inorganic particles, and an appropriate amount of inorganic particles may be dispersed. However, the present invention is not limited thereto.

Meanwhile, the insulating composition for an electrode according to the present invention includes inorganic particles and SBR in an amount of 1 to 50 parts by weight, 5 to 40 parts by weight, or 10 to 40 parts by weight with respect to 100 parts by weight of the NMP solvent.

The insulating composition may have a viscosity at 25 °C of 50 cP to 50,000 cP, 100 cP to 45,000 cP, 1,000 cP to 40,000 cP, 2,000 cP to 35,000 cP, 3,000 cP to 30,000 cP, 4,000 cP to 20,000 cP, or 5,000 cP to 10,000 cP, and within the above-described range, adhesion with an electrode mixture layer can be enhanced, and coatability, processability, and the like can be enhanced.

Hereinafter, the present invention will be described in further detail with reference to examples and experimental examples.

However, it should be understood that the following examples and experimental examples are given for the purpose of illustration only and are not intended to limit the scope of the present invention.

**Example 1.**

To 100 g of a styrene-butadiene rubber (hereinafter, referred to as SBR, BM451B commercially available from ZEON Chemicals) binder dispersed in water as a solvent in a ratio of 60:40 (parts by weight), 500 g of an N-methyl-2-pyrrolidone (NMP) solvent was added and stirred. Then, the stirred mixture was heated at 100 to 120 °C for 2 hours to completely evaporate water contained therein to prepare an NMP-substituted SBR binder. Then, the NMP-substituted SBR binder and inorganic particles were mixed in a weight ratio of 50:50 and stirred to prepare an insulating composition. The prepared insulating composition had a viscosity of 5,000 cP.

**Examples 2 to 4 and Comparative Examples 1 to 3.**

An insulating composition was obtained in the same manner as in Example 1, except that the amounts of inorganic particles and a binder are changed in the preparation of an insulating composition.

Specific compositions of Examples 1 to 4 and Comparative Examples 1 to 3 are shown in the following Table 1.

[Table 1]

| Classification | Insulating composition | | | |
|---|---|---|---|---|
| | Solvent | Inorganic particle | Binder | Inorganic particle:Binder (weight ratio) |
| Example 1 | NMP | AlOOH | SBR | 50:50 |
| Example 2 | NMP | AlOOH | SBR | 60:40 |
| Example 3 | NMP | AlOOH | SBR | 75:25 |
| Example 4 | NMP | AlOOH | SBR | 80:20 |
| Comparative Example 1 | Water | AlOOH | SBR | 50:50 |
| Comparative Example 2 | NMP | AlOOH | PVDF | 80:20 |
| Comparative Example 3 | NMP | AlOOH | PVDF | 88:12 |

**Experimental Example 1. Simultaneous application of positive electrode slurry and insulating composition**

96 parts by weight of $LiNi_{0.8}Co_{0.1}Mn_{0.1}O_2$ as a positive electrode active material, 2 parts by weight of PVdF as a binder, and 2 parts by weight of carbon black as a conductive material were weighed and mixed in an N-methyl-pyrrolidone (NMP) solvent to prepare a positive electrode slurry.

The positive electrode slurry and the insulating composition prepared in Example 1 or Comparative Example 1 were simultaneously applied onto a current collector using a double slot-die coater. Then, each electrode sample was dried at an average temperature of 60 °C.

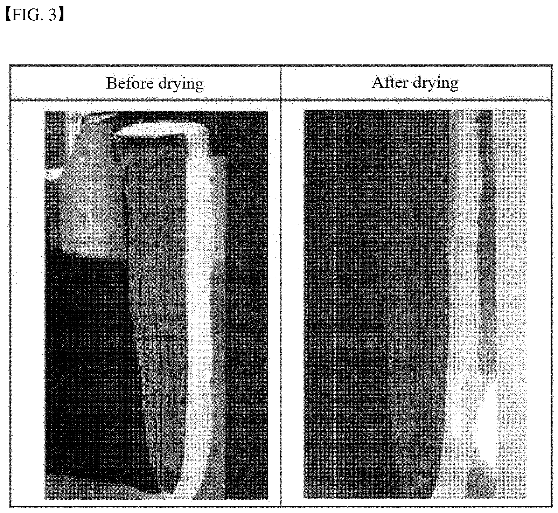

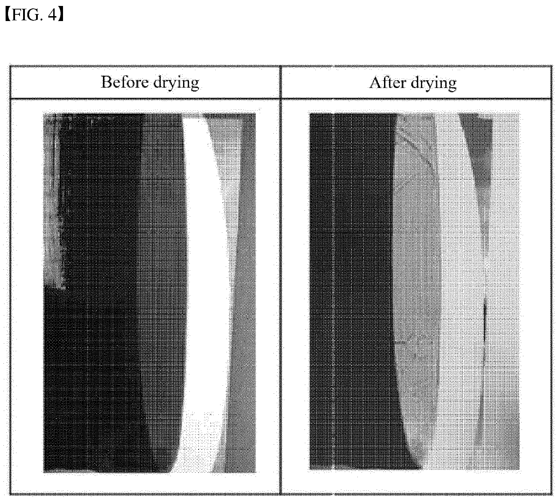

Results thereof are shown in FIGS. 3 and 4. FIG. 3 is a photographic image showing results before and after drying when the positive electrode slurry and the insulating composition prepared in Comparative Example 1 were simultaneously applied, and FIG. 4 is a photographic image showing results before and after drying when the positive electrode slurry and the insulating composition prepared in Example 1 were simultaneously applied.

As shown in the figures, referring to FIG. 3, the insulating composition of Comparative Example 1 showed gelation due to phase separation from the binder of the positive electrode slurry in the overlay region of the positive electrode mixture layer. On the other hand, referring to FIG. 4, the insulating composition of Example 1 did not show phase separation from the binder of the positive electrode slurry.

**Experimental Example 2. Measurement of wet adhesion of insulating layer**

In order to evaluate the adhesion of an insulating layer according to the present invention, an experiment was performed as follows.

Metal specimen including insulating layer formed therein

Each of the insulating compositions prepared in Examples 1 to 4 and Comparative Examples 2 and 3 was applied onto an aluminum metal foil and dried to prepare a metal specimen in which an about 10 $\mu$m-thick insulating layer was formed. The metal specimen including the insulating layer formed therein was blanked to a size of 2 cm $\times$ 2 cm using a blanking device for adhesion measurement.

Application of ultrasonic waves

200 g of a liquid electrolyte (EC/EMC=3/7 (vol%)) was input into a 250 ml beaker, and the metal specimen including the insulating layer formed therein was immersed in the liquid electrolyte. In order to control the movement of the metal specimen, the metal specimen was immobilized with a jig.

Then, ultrasonic waves were applied to the liquid electrolyte in which the metal specimen was immersed using a sonicator (4200 commercially available from BANDELIN). In this case, conditions for applying ultrasonic waves were as follows.

- Frequency: 20 kHz

- Tip diameter: 13 mm (TS-113)

- Amplitude: 100%

(in use of 13 mm tip, peak-to-peak 132 $\mu$m)

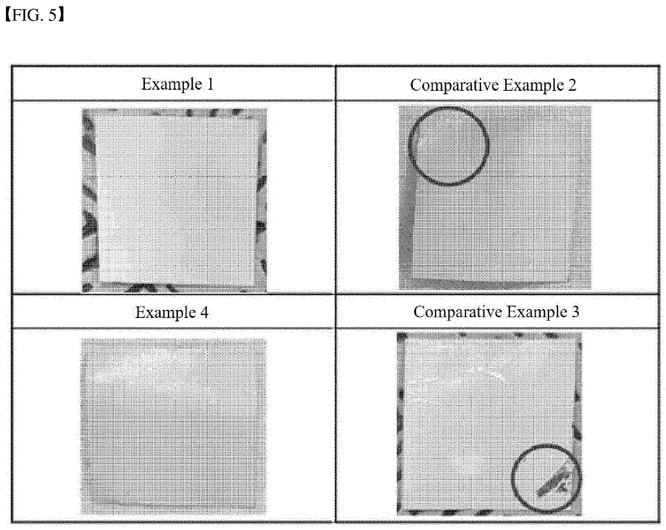

Results thereof are shown in the following Table 2 and FIG. 5.

[Table 2]

| Classification | Example 1 | Example 2 | Example 3 | Example 4 | Comparative Example 2 | Comparative Example 3 |
|---|---|---|---|---|---|---|
| Composition | AlOOH:SB R =50:50 | AlOOH:SB R =60:40 | AlOOH:SB R =75:25 | AlOOH:SB R =80:20 | AlOOH:PVD F =80:20 | AlOOH:PVD F =88:12 |
| Time (mins) | 19 | 19 | 19 | 15 | 5 | 10 |
| Termination temperature (°C) | 109 | 109 | 109 | 100 | 71 | 87 |
| Comparison of wet adhesion | no swelling and no detachment | no swelling and no detachment | no swelling and no detachment | no swelling and no detachment | swelling | swelling and detachment |

FIG. 5 is a diagram showing results of measuring the wet adhesion of insulating layers of Examples 1 and 4 and Comparative Examples 2 and 3. Referring to Table 2 and FIG. 5, the electrode specimen of Example 1 did not show swelling or detachment of the insulating layer. However, in the case of Example 1, when 109 °C was reached, measurement was stopped as a measurement environment was changed by evaporating a solvent due to an increase in the temperature of a liquid electrolyte due to application of ultrasonic waves and the EMC boiling point of 107.5 °C.

Although not shown in the figure, like Example 1, the electrode specimens of Examples 2 and 3 did also not show swelling or detachment of the insulating layer. However, when 109 °C was reached, measurement was stopped as a measurement environment was changed by evaporating the solvent due to the EMC boiling point of 107.5 °C.

In the case of Example 4, swelling or detachment did not occur in the electrode specimen during 15 minutes of application of ultrasonic waves to a liquid electrolyte. However, although not shown in the figure, when 108 °C was reached as the temperature of a liquid electrolyte was increased due to continuous application of ultrasonic waves, swelling and detachment in the electrode specimen occurred.

In addition, in the case of Comparative Examples 2 and 3, swelling and detachment in the electrode specimen occurred in just 5 minutes of application of ultrasonic waves to a liquid electrolyte.

From the above results, it could be confirmed that the insulating layers of Examples had excellent wet adhesion compared to the insulating layers of Comparative Examples 2 and 3.

**Experimental Example 3. Evaluation of capacity expression of battery cell**

In order to evaluate the performance of the positive electrode including an insulating layer according to the present invention, a half-cell was fabricated, and then capacity expression was evaluated.

Fabrication of half-cell

96 parts by weight of $LiNi_{0.8}Co_{0.1}Mn_{0.1}O_2$ as a positive electrode active material, 2 parts by weight of polyvinylidene fluoride (PVDF) as a binder, and 2 parts by weight of carbon black as a conductive material were weighed and mixed in an N-methylpyrrolidone (NMP) solvent to prepare a positive electrode slurry. Then, the positive electrode slurry was applied onto an aluminum foil, dried, and roll-pressed to manufacture a positive electrode including a positive electrode mixture layer (average thickness: 130 $\mu$m).

Then, the positive electrode was dip-coated with each insulating coating liquid obtained in Examples 1 to 3 and then dried in a convection oven (130 °C) to form a 10 $\mu$m-thick insulating layer in the positive electrode. A lithium foil as a negative electrode and a liquid electrolyte in which 1 M $LiPF_6$ was added in a solvent (EC:DMC:DEC=1:2:1) were used to fabricate a coin-type half-cell.

[Table 3]

| Insulating layer | Battery |
|---|---|
| Example 1 | Example 5 |
| Example 2 | Example 6 |
| Example 3 | Example 7 |

Measurement of discharge capacity

The discharge characteristics of the batteries of Examples 5 to 7 were evaluated under the following conditions. Also, the discharge characteristics were measured each at room temperature (25 °C) and high temperature (45 °C).

- Discharge: 0.1C, 0.33C, 0.5C, 1.0C, 2.5, cut-off

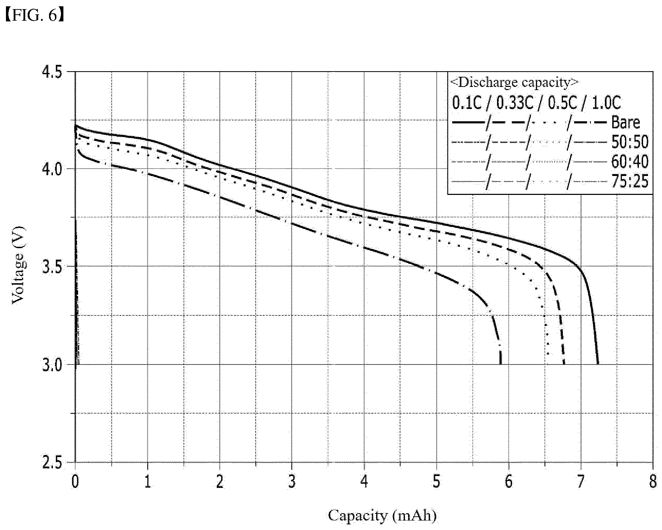

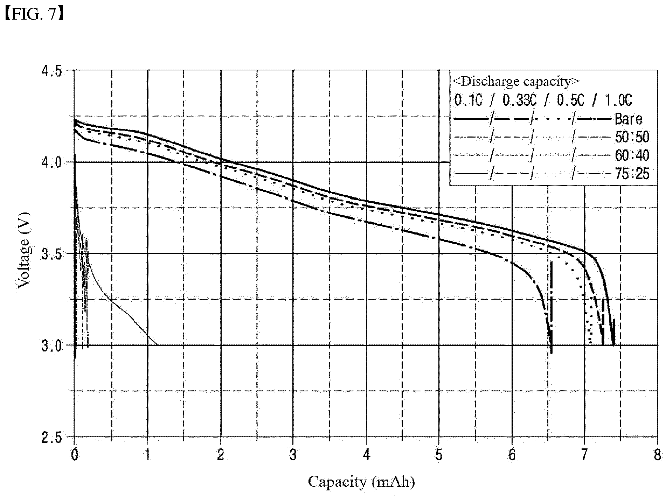

Meanwhile, to compare the capacity expression of each battery, a battery cell including an electrode including no insulating layer was used as Comparative Example 4. Results thereof are shown in Tables 4 and 5 and FIGS. 6 and 7.

[Table 4]

| Classification | Insulating composition | | | | Room-temperature discharge rate (%) | | | |
|---|---|---|---|---|---|---|---|---|
| | Solvent | Inorganic particle | Binder | Inorganic particle:Binder (weight ratio) | 0.1C | 0.33C | 0.5C | 1.0C |
| Comparative Example 4 | - | - | - | - | 100.00 | 100.00 | 100.00 | 100.00 |
| Example 5 | NMP | AlOOH | SBR | 50:50 | 0.33 | 0.06 | 0.05 | 0.00 |

(continued)

| Classification | Insulating composition | | | | Room-temperature discharge rate (%) | | | |
|---|---|---|---|---|---|---|---|---|
| | Solvent | Inorganic particle | Binder | Inorganic particle:Binder (weight ratio) | 0.1C | 0.33C | 0.5C | 1.0C |
| Example 6 | NMP | AlOOH | SBR | 60:40 | 0.60 | 0.09 | 0.05 | 0.03 |
| Example 7 | NMP | AlOOH | SBR | 75:25 | 0.27 | 0.06 | 0.03 | 0.00 |

[Table 5]

| Classification | Insulating composition | | | | High-temperature discharge rate (%) | | | |
|---|---|---|---|---|---|---|---|---|
| | Solvent | Inorganic particle | Binder | Inorganic particle:Binder (weight ratio) | 0.1C | 0.33C | 0.5C | 1.0C |
| Comparative Example 4 | - | - | - | - | 100.00 | 100.00 | 100.00 | 100.00 |
| Example 5 | NMP | AlOOH | SBR | 50:50 | 2.23 | 0.21 | 0.15 | 0.05 |
| Example 6 | NMP | AlOOH | SBR | 60:40 | 1.41 | 0.18 | 0.15 | 0.03 |
| Example 7 | NMP | AlOOH | SBR | 75:25 | 15.35 | 0.18 | 0.15 | 0.03 |

Referring to Tables 4 and 5 and FIGS. 6 and 7, in the case of high-temperature discharging (45 °C), the battery of Example 7 partially expressed capacity when discharged at 0.1C, whereas the batteries of Examples 5 and 6 hardly expressed capacity in the case of room-temperature discharging (25 °C).

The above result is considered to be due to the fact that the insulating layer prevents the migration of lithium ions in the overlay region of the electrode to suppress capacity expression and the like during discharging by having excellent wet adhesion in a liquid electrolyte. Accordingly, in the case of the lithium secondary battery according to the present invention, degradation of capacity according to a cycle increase can be suppressed, and safety can be improved.

While the present invention has been described above with reference to the exemplary embodiments, it can be understood by those skilled in the art that various modifications and alterations may be made without departing from the technical scope of the present invention described in the appended claims.

Therefore, the technical scope of the present invention should be defined by the appended claims and not limited by the detailed description of the specification.

## Claims

1.   A method of manufacturing an electrode for a secondary battery, comprising:

applying an electrode slurry including an electrode active material and a non-aqueous organic solvent, a conductive material, and a non-aqueous binder onto one surface or both surfaces of a current collector;
applying an insulating composition including an aqueous binder dispersed in a non-aqueous organic solvent so that the insulating composition covers from a portion of the non-coating part of the current collector to a portion of the electrode slurry applied onto the current collector; and
drying the electrode slurry and insulating composition applied onto the current collector,
wherein the electrode slurry and the insulating composition include the same non-aqueous organic solvent
wherein the application of an electrode slurry and the application of an insulating composition satisfy the following Expression 1:

[Expression 1]

$$0 \leq T2\text{-}T1 \leq 100$$

in Expression 1,

T1 refers to the time at which an electrode slurry is discharged onto a current collector from a slot-die coater in the application of an electrode slurry, and

T2 refers to the time at which an insulating composition is discharged onto a current collector from a slot-die coater in the application of an insulating composition,

wherein T1 and T2 are in seconds,

wherein the non-aqueous binder comprises one or more chosen from the group consisting of polyvinylidene fluoride (PVDF), polyvinylidene fluoride-co-hexafluoropropylene (PVDF-co-HFP), polyethylene oxide (PEO), polyacrylic acid (PAA), polyimide (PI), polyamideimide (PAI), and a polyimide-polyamideimide copolymer (PI-PAI), and

wherein the aqueous binder comprises one or more chosen from styrene-butadiene rubber, acrylate styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylene-propylene copolymer, polyethylene oxide, polyvinylpyrrolidone, polyepichlorohydrin, polyphosphazene, polyacrylonitrile, polystyrene, an ethylene-propylene-diene copolymer, polyvinylpyridine, chlorosulphonated polyethylene, latex, polyester resin, an acrylic resin, phenolic resin, an epoxy resin, polyvinyl alcohol, hydroxypropyl methylcellulose, hydroxypropyl cellulose, and diacetyl cellulose.

2. The method of claim 1, wherein the application of an insulating composition is performed in a state in which the electrode slurry applied onto the current collector is not dried.

3. The method of claim 1, wherein the non-aqueous organic solvent comprises one or more chosen from the group consisting of N-methyl-pyrrolidone (NMP), dimethyl formamide (DMF) and dimethyl acetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methyl propyl carbonate (MPC), ethyl propyl carbonate (EPC), acetonitrile, dimethoxyethane, tetrahydrofuran (THF), $\gamma$-butyrolactone, methyl alcohol, ethyl alcohol, and isopropyl alcohol.

4. The method of claim 1, wherein the insulating composition further includes inorganic particles.

5. The method of claim 4, wherein the inorganic particles are one or more selected from the group consisting of AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, silicon carbide (SIC), and boron nitride (BN).

6. The method of claim 4, wherein a weight ratio of the inorganic particle and aqueous binder in the insulating composition ranges from 1:99 to 95:5.

7. The method of claim 1, wherein the insulating composition includes: an aqueous binder dispersed in a non-aqueous organic solvent; and inorganic particles dispersed in the aqueous binder matrix dispersed in a non-aqueous organic solvent,

a weight ratio of the inorganic particle and the aqueous binder ranges from 1:99 to 95:5, and
the insulating composition has a viscosity at 25 °C ranges from 50 cP to 50,000 cP.

8. The method of claim 1, wherein the non-aqueous organic solvent is N-methyl-pyrrolidone (NMP), and the aqueous binder is styrene-butadiene rubber (SBR).

9. The method of claim 1, wherein the drying of the electrode slurry and insulating composition applied onto the current collector is performed at an average temperature of 50 °C to 300 °C.

10. The method of claim 1, wherein the applying the electrode slurry and the applying the insulating composition are performed using a single die coater including two slots.

11. The method of claim 1, wherein the applying the electrode slurry and applying the insulating composition are performed using two separate die coaters.

12. The method of claim 1, wherein T2-T1 = 0.

**Patentansprüche**

1. Verfahren zum Herstellen einer Elektrode für eine Sekundärbatterie, umfassend:

   Aufbringen einer Elektrodenaufschlämmung, welche ein Elektrodenaktivmaterial sowie ein nichtwässriges organisches Lösungsmittel, ein leitfähiges Material und ein nichtwässriges Bindemittel umfasst, auf eine Fläche oder beide Flächen eines Stromkollektors;
   Aufbringen einer Isolierungszusammensetzung, welche ein wässriges Bindemittel umfasst, welches in einem nichtwässrigen organischen Lösungsmittel dispergiert ist, so dass die Isolierungszusammensetzung einen Abschnitt des Nicht-Beschichtungsteils des Stromkollektors zu einem Abschnitt der Elektrodenaufschlämmung abdeckt, welche auf den Stromkollektor aufgebracht wird; und
   Trocknen der Elektrodenaufschlämmung und der Isolierungszusammensetzung, welche auf den Stromkollektor aufgebracht werden,
   wobei die Elektrodenaufschlämmung und die Isolierungszusammensetzung das gleiche nichtwässrige organische Lösungsmittel umfassen,
   wobei das Aufbringen einer Elektrodenaufschlämmung und das Aufbringen einer Isolierungszusammensetzung den folgenden Ausdruck 1 erfüllt:

   [Ausdruck 1]

   $$0 \leq T2\text{-}T1 \leq 100$$

   wobei, in Ausdruck 1, sich T1 auf die Zeit bezieht, bei welcher eine Elektrodenaufschlämmung bei der Aufbringung einer Elektrodenaufschlämmung von einem Schlitzdüsenbeschichter auf einen Stromkollektor abgegeben wird, und
   sich T2 auf die Zeit bezieht, bei welcher eine Isolierungszusammensetzung bei der Aufbringung einer Isolierungszusammensetzung von einem Schlitzdüsenbeschichter auf einen Stromkollektor abgegeben wird,
   wobei T1 und T2 in Sekunden angegeben werden,
   wobei das nichtwässrige Bindemittel eines oder mehrere umfasst, ausgewählt aus der Gruppe, bestehend aus Polyvinylidenfluorid (PVDF), Polyvinylidenfluorid-co-Hexafluoropropylen (PVDF-co-HFP), Polyethylenoxid (PEO), Polyacrylsäure (PAA), Polyimid (PI), Polyamidimid (PAI) und Polyimid-Polyamidimid-Copolymer (PI-PAI), und
   wobei das wässrige Bindemittel eines oder mehrere umfasst, ausgewählt aus Styrol-Butadien-Kautschuk, Acrylat-Styrol-Butadien-Kautschuk, Acrylnitril-Butadien-Kautschuk, Acrylnitril-Butadien-Styrol-Kautschuk, Acrylkautschuk, Butylkautschuk, Fluorkautschuk, Polytetrafluorethylen, Polyethylen, Polypropylen, ein Ethylen-Propylen-Copolymer, Polyethylenoxid, Polyvinylpyrrolidon, Polyepichlorhydrin, Polyphosphazen, Polyacrylnitril, Polystyrol, ein Ethylen-Propylen-Dien-Copolymer, Polyvinylpyridin, chlorsulfoniertes Polyethylen, Latex, Polyesterharz, ein Acrylharz, Phenolharz, ein Epoxidharz, Polyvinylalkohol, Hydroxypropylmethylcellulose, Hydroxypropylcellulose und Diacetylcellulose.

2. Verfahren nach Anspruch 1, wobei das Aufbringen einer Isolierungszusammensetzung in einem Zustand durchgeführt wird, in welchem die Elektrodenaufschlämmung, welche auf den Stromkollektor aufgebracht wird, nicht getrocknet ist.

3. Verfahren nach Anspruch 1, wobei das nichtwässrige organische Lösungsmittel eines oder mehrere umfasst, ausgewählt aus der Gruppe, bestehend aus N-Methylpyrrolidon (NMP), Dimethylformamid (DMF) und Dimethylacetamid (DMAc), Dimethylsulfoxid (DMSO), Ethylencarbonat (EC), Diethylcarbonat (DEC), Ethylmethylcarbonat (EMC), Dimethylcarbonat (DMC), Propylencarbonat (PC), Dipropylcarbonat (DPC), Butylencarbonat (BC), Methylpropylcarbonat (MPC), Ethylpropylcarbonat (EPC), Acetonitril, Dimethoxyethan, Tetrahydrofuran (THF), $\gamma$-Butyrolacton, Methylalkohol, Ethylalkohol und Isopropylalkohol.

4. Verfahren nach Anspruch 1, wobei die Isolierungszusammensetzung ferner anorganische Partikel umfasst.

5. Verfahren nach Anspruch 4, wobei die anorganischen Partikel eines oder mehrere sind, ausgewählt aus der Gruppe, bestehend aus AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, Siliziumcarbid (SiC) und Bornitrid (BN).

6. Verfahren nach Anspruch 4, wobei ein Gewichtsverhältnis aus den anorganischen Partikeln und einem wässrigen Bindemittel in der Isolierungszusammensetzung von 1:99 zu 95:5 reicht.

7. Verfahren nach Anspruch 1, wobei die Isolierungszusammensetzung umfasst: ein wässriges Bindemittel, welches in einem nichtwässrigen organischen Lösungsmittel dispergiert ist; und anorganische Partikel, welche in der wässrigen Bindemittelmatrix dispergiert sind, welche in einem nichtwässrigen organischen Lösungsmittel dispergiert ist,

wobei ein Gewichtsverhältnis aus den anorganischen Partikeln und dem wässrigen Bindemittel von 1:99 zu 95:5 reicht, und
wobei die Isolierungszusammensetzung bei 25 °C eine Viskosität aufweist, welche von 50 cP bis 50.000 cP reicht.

8. Verfahren nach Anspruch 1, wobei das nichtwässrige organische Lösungsmittel N-Methyl-Pyrrolidon (NMP) ist und das wässrige Lösungsmittel Styrol-Butadien-Kautschuk (SBR) ist.

9. Verfahren nach Anspruch 1, wobei das Trocknen der Elektrodenaufschlämmung und der Isolierungszusammensetzung, welche auf den Stromkollektor aufgebracht werden, bei einer Durchschnittstemperatur von 50 °C bis 300 °C durchgeführt wird.

10. Verfahren nach Anspruch 1, wobei das Aufbringen der Elektrodenaufschlämmung und das Aufbringen der Isolierungszusammensetzung unter Verwendung eines Einzeldüsenbeschichters durchgeführt wird, umfassend zwei Schlitze.

11. Verfahren nach Anspruch 1, wobei das Aufbringen der Elektrodenaufschlämmung und das Aufbringen der Isolierungszusammensetzung unter Verwendung zweier separater Düsenbeschichter durchgeführt wird.

12. Verfahren nach Anspruch 1, wobei T2-T1 = 0.

## Revendications

1. Procédé de fabrication d'une électrode pour une batterie secondaire, le procédé comprenant :

l'application d'une barbotine d'électrode comportant un matériau actif d'électrode et un solvant organique non aqueux, un matériau conducteur et un liant non aqueux sur une surface ou les deux surfaces d'un collecteur de courant ;
l'application d'une composition isolante comportant un liant aqueux dispersé dans un solvant organique non aqueux, de manière à ce que la composition isolante couvre depuis une partie de la partie de non-revêtement du collecteur de courant jusqu'à une partie de la barbotine d'électrode appliquée sur le collecteur de courant ; et
le séchage de la barbotine d'électrode et de la composition isolante appliquées sur le collecteur de courant,
dans lequel la barbotine d'électrode et la composition isolante comportent le même solvant organique non aqueux
dans lequel l'application d'une barbotine d'électrode et l'application d'une composition isolante satisfont à l'Expression 1 suivante :

[Expression 1]

$$0 \leq T2\text{-}T1 \leq 100$$

dans l'Expression 1,
T1 désigne le moment auquel une barbotine d'électrode est déchargée sur un collecteur de courant à partir d'une coucheuse à filière plate lors de l'application d'une barbotine d'électrode, et
T2 désigne le moment auquel une composition isolante est déchargée sur un collecteur de courant à partir d'une coucheuse à filière plate lors de l'application d'une composition isolante,
dans lequel T1 et T2 sont en secondes,
dans lequel le liant non aqueux comprend un ou plusieurs éléments choisis parmi le polyfluorure de vinylidène (PVDF), le polyfluorure de vinylidène-cohexafluoropropylène (PVDF-co-HFP), le polyoxyde d'éthylène (PEO), le polyacide acrylique (PAA), la polyimide (PI), la polyamideimide (PAI) et un copolymère de polyimide-polyamideimide (PI-PAI), et

dans lequel le liant aqueux comprend un ou plusieurs éléments choisis parmi le caoutchouc de styrène-butadiène, le caoutchouc d'acrylate styrène-butadiène, le caoutchouc d'acrylonitrile-butadiène, le caoutchouc d'acrylonitrile-butadiène-styrène, le caoutchouc acrylique, le caoutchouc de butyle, le caoutchouc fluoré, le polytétrafluoroéthylène, le polyéthylène, le polypropylène, un copolymère d'éthylène-propylène, le polyoxyde d'éthylène, la polyvinylpyrrolidone, la polyépichlorhydrine, le polyphosphazène, le polyacrylonitrile, le polystyrène, un copolymère d'éthylène-propylène-diène, la polyvinylpyridine, le polyéthylène chlorosulfoné, le latex, une résine de polyester, une résine acrylique, une résine phénolique, une résine époxy, le polyalcool vinylique, l'hydroxypropyl méthylcellulose, l'hydroxypropyl cellulose et la diacétyl cellulose.

2. Procédé selon la revendication 1, dans lequel l'application d'une composition isolante est réalisée dans un état dans lequel la barbotine d'électrode appliquée sur le collecteur de courant n'est pas séchée.

3. Procédé selon la revendication 1, dans lequel le solvant organique non aqueux comprend un ou plusieurs éléments choisis dans le groupe consistant en N-méthyl-pyrrolidone (NMP), diméthyl formamide (DMF) et diméthyl acétamide (DMAc), diméthyl sulfoxyde (DMSO), carbonate d'éthylène (CE), carbonate de diéthyle (DEC), carbonate d'éthylméthyle (EMC), carbonate de diméthyle (DMC), carbonate de propylène (PC), carbonate de dipropyle (DPC), carbonate de butylène (BC), carbonate de méthylpropyle (MPC), carbonate d'éthylpropyle (EPC), acétonitrile, diméthoxyé-thane, tétrahydrofurane (THF), $\gamma$-butyrolactone, alcool méthylique, alcool éthylique et alcool isopropylique.

4. Procédé selon la revendication 1, dans lequel la composition isolante comporte en outre des particules inorganiques.

5. Procédé selon la revendication 4, dans lequel les particules inorganiques sont un ou plusieurs éléments choisis dans le groupe consistant en AlOOH, $Al_2O_3$, $\gamma$-AlOOH, $Al(OH)_3$, $Mg(OH)_2$, $Ti(OH)_4$, MgO, CaO, $Cr_2O_3$, $MnO_2$, $Fe_2O_3$, $Co_3O_4$, NiO, $ZrO_2$, $BaTiO_3$, $SnO_2$, $CeO_2$, $Y_2O_3$, $SiO_2$, carbure de silicium (SIC) et nitrure de bore (BN).

6. Procédé selon la revendication 4, dans lequel le rapport en poids entre la particule inorganique et le liant aqueux dans la composition isolante va de 1:99 à 95:5.

7. Procédé selon la revendication 1, dans lequel la composition isolante comporte : un liant aqueux dispersé dans un solvant organique non aqueux ; et des particules inorganiques dispersées dans la matrice de liant aqueux dispersée dans un solvant organique non aqueux,
un rapport pondéral de la particule inorganique et du liant aqueux va de 1:99 à 95:5, et la composition isolante a une viscosité à 25 °C allant de 50 cP à 50 000 cP.

8. Procédé selon la revendication 1, dans lequel le solvant organique non aqueux est la N-méthyl-pyrrolidone (NMP), et le liant aqueux est le caoutchouc de styrène-butadiène (SBR).

9. Procédé selon la revendication 1, dans lequel le séchage de la barbotine d'électrode et de la composition isolante appliquées sur le collecteur de courant est réalisé à une température moyenne de 50 °C à 300 °C.

10. Procédé selon la revendication 1, dans lequel l'application de la barbotine d'électrode et l'application de la composition isolante sont réalisées à l'aide d'une seule coucheuse à filière comportant deux fentes.

11. Procédé selon la revendication 1, dans lequel l'application de la barbotine d'électrode et l'application de la composition isolante sont réalisées à l'aide de deux coucheuses à filière séparées.

12. Procédé selon la revendication 1, dans lequel T2-T1 = 0.

【FIG. 1】

【FIG. 2】

| | |
|---|---|
| Applying electrode slurry including electrode active material, conductive material, and non-aqueous binder onto one surface or both surfaces of current collector | S10 |
| Applying insulating composition including aqueous binder substituted with non-aqueous solvent so that the insulating composition covers from portion of non-coating part of current collector to portion of electrode slurry applied onto current collector | S20 |
| Drying electrode slurry and insulating composition applied onto current collector | S30 |

【FIG. 3】

| Before drying | After drying |
|---|---|

【FIG. 4】

| Before drying | After drying |
|---|---|

【FIG. 5】

| Example 1 | Comparative Example 2 |
|---|---|
| Example 4 | Comparative Example 3 |

【FIG. 6】

【FIG. 7】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210113557
- KR 1020220090828
- EP 4181267 A
- JP 2021026885 B